Europäisches Patentamt

European Patent Office

Office européen des brevets

(19)

(11) Publication number: **0 068 724**
**B1**

# (12) EUROPEAN PATENT SPECIFICATION

(45) Date of publication of patent specification: **27.03.85**

(21) Application number: **82303128.1**

(22) Date of filing: **16.06.82**

(51) Int. Cl.⁴: **A 23 L 3/34,** A 23 B 7/144,
A 01 N 25/00

(54) **Produce fumigation method and apparatus.**

(30) Priority: **18.06.81 NZ 197457**

(43) Date of publication of application:
**05.01.83 Bulletin 83/01**

(45) Publication of the grant of the patent:
**27.03.85 Bulletin 85/13**

(84) Designated Contracting States:
**BE DE FR GB IT NL SE**

(56) References cited:
BE-A- 514 598
DE-A-2 921 706
FR-A- 882 948
FR-A- 986 967
FR-A-1 193 890
FR-A-2 095 616
FR-A-2 165 697
GB-A- 819 638
LU-A- 35 082
US-A-2 080 179
US-A-2 482 958
US-A-3 802 333

(73) Proprietor: **THE NEW ZEALAND APPLE AND
PEAR MARKETING BOARD
73-75, Cambridge Terrace
Wellington (NZ)**

(72) Inventor: **McLachlan, Corran Norman Stuart
Department of Scientific Research Gracefield
Lower Hutt (NZ)**
Inventor: **Nicol, Ross Stuart
Department of Scientific Research Gracefield
Lower Hutt (NZ)**
Inventor: **Smith, Donald Kenneth Weldon
Department of Scientific Research Gracefield
Lower Hutt (NZ)**
Inventor: **Fieldes, Robert Blake
Department of Scientific Research Gracefield
Lower Hutt (NZ)**
Inventor: **Collie, Naylor
17 Moncrief Avenue
Tahunanui Nelson (NZ)**

(74) Representative: **Collier, Jeremy Austin Grey
et al
J.A.Kemp & Co. 14, South Square Gray's Inn
London WC1R 5EU (GB)**

Courier Press, Leamington Spa, England.

(56) References cited:
CHEMICAL ABSTRACTS, vol. 91, no. 11, 10th September 1979, page 620, no. 89727s, Columbus Ohio (USA);D.H. SPALDING et al.: "Ethylene dibromide methyl bromide and phosphine fumigation of tomatoes"
FSTA 82026768 JOURNAL, vol. 56, no. 4, 6 Ref., 1981, pages 323-329, Journal of Horticultural Science; C.R. LITTLE et al.: "Orchard locality and storage factors affecting the commercial quality of Australian Granny Smith apples"

## Description

### Background of the Invention
#### 1. Field of the Invention

This invention relates to a produce fumigation process, and more particularly to the fumigation of apples and other produce with methyl bromide or ethylene dibromide.

### 2. Description of the Prior Art

It is conventional practice in the produce packing art to fumigate produce which is thought to be contaminated by insects. The practice is to subject the produce to dosages of low concentrations of a fumigant for periods of two to three hours which is sufficient to kill the infesting insect species. Generally fumigation is carried out in a specially constructed sealable vessel built to withstand a vacuum. Alternatively, produce is enclosed within a plastic cover to retain a fumigant for a sufficient length of time to allow it to kill the infesting species. Common fumigants include methyl bromide, ethylene dibromide, hydrogen cyanide or mixtures of these. The fumigants may be employed with or without an inert atmosphere and may include the addition of gases such as carbon dioxide, carbon monoxide or nitrogen. Each fumigant has its particular advantages and disadvantages but of paramount concern in relation to produce are the chemical residues deposited in the produce as a result of the fumigation. Modern practice is to endeavour to strike a fine balance aiming to minimise residues while still giving complete pest mortalities.

In the apple packing industry it is accepted practice to fumigate packed graded fruit immediately prior to storage or transport. Where transport to another country or state is involved fumigation is often carried out upon arrival. Methyl bromide and ethylene dibromide are the most commonly used fumigants added at dosages of 10 to 60 g/m³ for the former and 2 to 20 g/m² for the latter, depending on the temperature, for two to two and a half hours.

Fruit damage often results following such fumigation, the severity of the damage varying between the type of apple and sometimes between sources for the same type of apple. In addition damage may vary with fruit maturity and length of time in storage prior to fumigation. Such damage may be mitigated by the use of a dip with an antiscald agent such as diphenylamine (DPA) or by using a wrap impregnated with a compound such as DPA.

It is an object of this invention to go some way towards overcoming this disadvantage or to at least offer the public a useful choice.

### Summary of the Invention

The present invention consists broadly in a process for the fumigation of produce which comprises treating said produce with gaseous methyl bromide or gaseous ethylene dibromide for from 5 to 30 minutes in a concentration which in the case of methyl bromide is from 40 to 600 g/ m³ with the proviso that the product of concentration (expressed in g/m³) × time (expressed in hours) is within the range of 20 to 150 ghr/m³, and in the case of ethylene dibromide is from 10 to 200 g/m³ with the proviso that the ct product is from 5 to 50 ghr/m³.

Preferably said treatment is conducted from 8 to 15 minutes.

Preferably said treatment is conducted in a sealed fumigation chamber under a partial vacuum.

Preferably said concentration × time product (ct) is from 40 to 80 ghr/m³ for fumigating light brown apple moth or any other leaf roller species with methyl bromide.

Preferably said ct product is from 60—120 ghr/m³ for fumigating codling moth with methyl bromide.

Preferably said produce is apples.

Preferably said process includes a preliminary step of treating apples in a DPA solution with a concentration of up to 2000 ppm, for a time of up to 2 minutes and fumigating said treated apples within one half hour after said treating.

Preferably said process includes the additional step of rinsing said produce after said fumigation.

Preferably said treatment with said fumigant is carried out at a temperature of from 5°C to 40°C.

Preferably there is a controlled atmosphere containing inert gases such as carbon dioxide or nitrogen together with said fumigant.

Preferably said fumigant is recovered by adsorbing fumigant exhausted from said fumigation chamber on activated carbon. The fumigation may then be effected by desorbing adsorbed fumigant.

Alternatively said fumigant is stored in a vessel and reused in a fumigation cycle.

The process of the invention may be operated in an apparatus comprising a fumigation chamber capable of withstanding elevated and reduced pressures,

means for opening and closing said chamber,

means for injecting a metered amount of fumigant into said chamber,

means for flushing fumigant from said chamber,

sequencing means for sequencing the operation of said opening and closing means, said injecting means and said flushing means, the arrangement being such that in use said sequencing means activates said injecting means when said chamber is closed, activates said flushing means after fumigant has been in said chamber a predetermined length of time and opens said chamber after a predetermined flushing time.

Preferably said apparatus includes means for pressurising or evacuating said chamber and the arrangement is such that said sequencing means activates said injecting means when a predetermined pressure is reached in said chamber.

Preferably said apparatus includes means for detecting the presence of fumigant in said chamber and the arrangement is such that said sequencing means open said doors only after said detecting means has detected that the concentration of fumigant has fallen below a predetermined level.

Preferably said door opening and closing means comprises an hydraulically operated ram and locking mechanism activated by said sequencing means.

Preferably said chamber is provided with an evacuating means comprising a vacuum pump.

Preferably said means for injecting comprises a single dose piston injector.

In another alternative said means for injecting fumigant comprises a fumigant adsorber/desorber.

Preferably there are a pair of said fumigant adsorber/desorbers and said sequencing means is programmed to allow for one to be desorbing while the other is adsorbing and vice versa.

Preferably there is provided conveying means for conveying produce into and out of said fumigation chamber.

Preferably said sequencing means comprises a microprocessor.

Preferably there is provided means for heating and/or cooling said fumigant.

Preferably there is provided liquid spraying means within said chamber to assist in removal of said fumigant.

In more detail the process of the invention may be operated in apparatus constructed, for example, as follows.

Brief Description of the Drawings

In the accompanying drawings

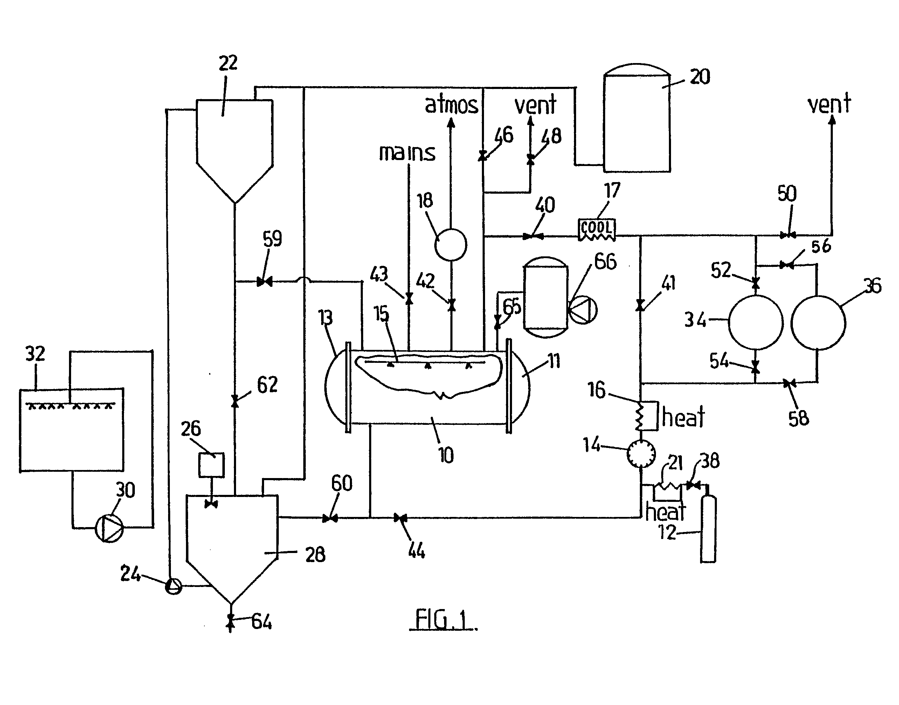

Figure 1 is a schematic diagram of a preferred embodiment of the invention,

Figure 2 is a flow diagram of the control functions of a preferred embodiment of the invention.

Description of the Preferred Embodiments

*Construction*

Fumigation chamber 10 is pressure tight and can withstand pressures up to 2 to 3 atmospheres or a high vacuum. Chamber 10 is provided with doors 11 and 13 at either end thereof. A portion of the chamber is illustrated as broken away to show a sprayer 15 which is connected to a mains source of water through valve 43.

In the apparatus illustrated, the fumigant to be employed is stored under pressure in a gas cylinder 12. A vapouriser 21 in the form of a heater is provided to vapourise any fumigant not in a gaseous form after passing control valve 38. Valve 38 is a three-way valve connected with an apparatus known as a single dose piston injector. The injection is precalibrated to withdraw a metered amount of fumigant from cylinder 12 in a first configuration. In a second configuration valve 38 is closed and the dose of fumigant is stored in the injector. In the third configuration valve 38 is opened to the circuit which circulates the gas through chamber 10. A blower 14 is provided in series with a fumigant heater 16 and cooler 17. A vacuum pump 18 is connected through valve 42 with chamber 10. A variable volume fumigant holding chamber 20 is provided in which is stored the fumigating medium. An upper tank 22 and lower tank 28 too are provided for storage of a working liquid, generally water. A pump 24 provides pumping for liquid from lower tank 28 to upper tank 22. A mixer 26 is also provided in tank 28. Tank 22 has a capacity to at least fill chamber 10 and tank 28 has a slightly greater capacity than the combined capacities of chamber 10 and tank 22.

A combination spray/dip booth 32 is provided adjacent door 13 of chamber 10. A second identical booth may be provided adjacent door 11. A conveyor, not illustrated, runs at either end from chamber 10 into tank 32 when present. A pump 30 recirculates liquid sprayed in tank 32.

A pair of fumigant adsorber/generator vessels 34 and 36 are provided. Each vessel contains a bed of activated carbon and a means for heating the carbon such as superheated steam or hot oil.

A compressor 66 is provided and when superatmospheric pressures are to be employed pressurises chamber 10. Control valves 40, 41, 42, 43, 44, 46, 48, 50, 52, 54, 56, 58, 59, 60, 62, 64, and 65 are provided in the circuit and their operation is described below.

*Operation*

In operation bins of fruit or produce preferably brought directly from the orchard or field were transferred into chamber 10 by means of a suitable conveyor after opening of door 11.

For some varieties of apples it was desirable to dip them in a solution of DPA prior to fumigation. This could be done in a tank or in a booth such as booth 32 prior to entry into chamber 10. Alternatively, the DPA solution was stored in tank 22 and the dipping was done in fumigation chamber 10. The dip solution employed had a concentration of up to 2000 ppm DPA. Dipping was maintained for up to two minutes, usually for from 1 to 2 minutes. We generally fumigated wet fruit as soon as possible after dipping. Fumigation could be delayed for half to three hours after dipping or even until the fruit was dry.

There are three distinct modes of fumigation that can be employed with the apparatus described.

*MODE 1. Direct Injection from Pressure Cylinder*

Vacuum pump 18 evacuates chamber 10 to a predetermined low pressure, for example 86 kPa abs which automatically activates and closes valve 42. A metered amount of methyl bromide gas from cylinder 12 is injected via valve 38 into the system through vapouriser 21 and is circulated by blower 14 through heater 16 and cooler 17. Valves 40, 41 and 44 are open while valves 42, 43, 46, 48, 50, 52, 54, 56, 58, 59, 60 and 65 are closed during this phase of the operation.

In the preferred embodiment according to this invention methyl bromide concentrations of 200 $g/m^3$ for twelve minutes or 300 $g/m^3$ for ten minutes have been found to be adequate to give complete kills of the larvae stage of the light brown apple moth (*Epiplyas Postvittana*) which is the most resistent to fumigation. These equate to ct values of 40 to 50. It will be seen that they are at the lower end of the range which is used in conventional fumigation. It has been observed that at these levels it has been possible to fumigate apples with little or no fruit damage and at very low levels of residual bromide. It has been found that times of from 5 to 30 minutes with concentrations up to 600 g/m³ have achieved the desired results. We have observed that concentrations of 40 to 600 g/m³ for times between five and thirty minutes give desired kills without high residual bromide levels with the proviso that the ct product remains in the range of 20 to 150 ghr/m³.

With ethylene dibromide as fumigant the concentration required for kills equivalent to those achieved with methyl bromide was between one half and one tenth, preferably one third and one quarter of that of methyl bromide. Fumigation times remained the same and thus ct values were proportionally smaller.

When the predetermined fumigation time has elapsed methyl bromide is vented by opening of valves 48 and 50 and closing valve 40. Atmospheric air entering through valve 48 displaces the methyl bromide.

When venting is substantially complete valve 43 may be opened and fresh water sprayed via sprayer 15 to remove most of the residual methyl bromide.

Detectors within chamber 10 detect a level of methyl bromide concentration down to 20 parts per million. When this minimum level is reached the doors 11 and 13 are opened and produce removed. It has been found that a first detector for larger concentrations and a second detector for micro concentrations give appropriate detection results.

### MODE 2. Circulation from Storage Tank

Fruit is placed in chamber 10 as before. Valves 48 and 59 are opened and all other valves into or out of chamber 10 are closed. Water from tank 22 floods chamber 10 expelling air present past valve 48 to atmosphere. Valves 59 and 48 are then closed and valves 46 and 60 opened. The water in chamber 10 is dumped into tank 28 and the fumigating medium in tank 20 is drawn into chamber 10. Valves 46 and 60 are closed, valves 40, 41 and 44 are opened and blower 14 is started. Vacuum pump 18 is also started and valve 42 opened. Valve 42 is set to close at a preset pressure, in this case 86 kPa abs, although the level is not critical. The fumigating medium is allowed to circulate in chamber 10 for a predetermined fumigation period. During fumigation pump 24 pumps water from lower tank 28 to upper tank 22. At the end of the fumigation period valves 40 and 44 are closed valves 59 and 46 are opened and water in tank 22 displaces the fumigating medium in chamber 10 and returns it to storage tank 20. Water in chamber 10 is again dumped into tank 28 by opening valves 48 and 60 and chamber 10 opened and the fruit removed. Fumigant lost by absorption in water and through vacuum pump 18 may be made up by injection of fumigant from tank 12 at the beginning of fumigation in the manner described above.

### MODE 3. Fumigant Adsorption/Desorption

Fruit is placed into the chamber 10 as before. For the first fumigation using this circuit the method described under part 1 above is repeated up to the point where venting of the fumigant is to commence. At the same time one of the vessels 34 or 36 is set for adsorption of fumigant being circulated through chamber 10 by closing valve 41 and by opening valves 52 and 54 or alternatively valves 58 and 56. When 90—95% of the circulating methyl bromide has been adsorbed valves 40, 44, 52, 54, 56 and 58 are closed and valves 48 and 50 are opened to vent the remaining methyl bromide. Fruit is removed as before. This cycle is repeated once so that the other of vessels 34 and 26 is loaded with adsorbed gas. Alternatively, the activated carbon in vessels 34 and 26 can both be loaded with methyl bromide at the same time by closing valve 41 as before and opening valves 52, 54, 56 and 58 and injecting 2 to 4 doses of methyl bromide through valve 38 from cyclinder 12 instead of a single dose as before.

While one vessel 34 is adsorbing fumigant the activated carbon in the other vessel 36 is being heated to 150°C for desorption of fumigant in the next fumigation cycle. After fruit is placed in the vessel under reduced pressure, as in mode 1 above, valves 40, 44, 56 and 58 are opened, valves 41, 50, 52, 54 and the remaining valves into chamber 10 are closed and desorbed fumigant from vessel 36 circulated into chamber 10. When the desired concentration of fumigant has been desorbed valve 41 is opened and valves 56 and 58 are closed for the balance of the fumigation period. Any shortfall of fumigant is made up by injection of the balance of fumigant required by injector 38 as described in relation to mode 1.

At the completion of fumigation valve 41 is again closed and either the pair of valves 52 and 54 or the pair of valves 56 and 58 is opened to the depleted vessel 34 or 36 and the circulating fumigant adsorbed onto the activated carbon. The loaded activated carbon in the other of vessels 34 and 36 is at this time being heated to 150° to begin the next cycle.

### Elevated Pressure Operation

With any one of the three modes of operation just described fumigation can be conducted in conjunction with compressor 66 and valve 65. The modes of operation are in each case as described above except that reference to the opening and closing of valve 42 should be read as opening and closing of valve 65 and the operation of vacuum pump 18 should be read as operation of compressor 66. Compressor 66 is adjusted to provide a temperature in excess of atmospheric, preferably 2 to 3 atmospheres.

Post Fumigation Treatment

After fumigation according to any one of the methods described above is completed door 13 is opened and the bins containing the apples transferred on a suitable conveyor into a spray and/or dip booth 32. In the present instance the booth consists of a stainless steel chamber having rollers to allow the bins of fruit to be passed therethrough. At the bottom of the chamber is a catching and holding reservoir and the water can be recirculated by means of pump 30. In some instances it is desirable to employ a solution of sodium chloride in finally washing the apples.

Automatic Sequencing

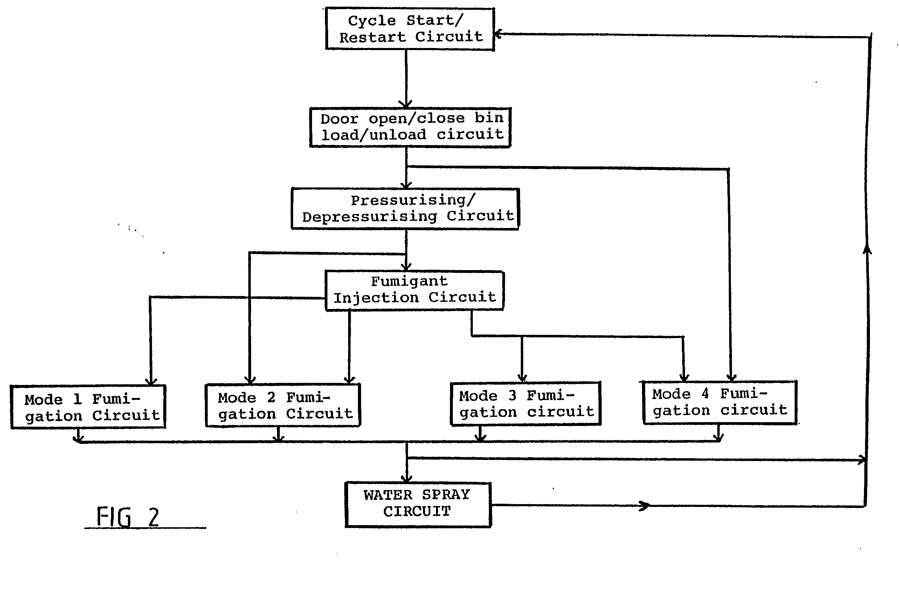

The operation of the microprocessor which can be used to automatically control the apparatus may be more fully understood by having reference to figure 2. Because the fumigant gases are toxic to humans there may be detectors at critical points throughout the overall plant for the protection of the operators. The main detectors may be within chamber 10. There will be a general detector which detects the higher concentrations and a micro-detector for detecting the quantities near the minimum. Referring to the flow sheet, when the cycle start/restart circuit, which is the gas level detector, has detected that the level has fallen below the maximum safe level then it will engage the door open and close circuit to activate hydraulic rams which open the doors of chamber 10, thus completing an operation and leaving the apparatus ready to begin a new operation. Other types of cycle start/restart cycles such as a timer may be employed alternatively.

When the doors are open the bin loading and unloading circuit positions rollers up to both ends of chamber 10 and a conveyor conveys bins of fruit into chamber 10 at the same time pushing the bins already in the chamber out of it.

Once bins of fruit have been placed into the chamber 10 an automatic cycle is started and the door open/close circuit ensures that both doors 11 and 13 are closed. Then when operating in either of modes 1 or 3 the pressurising/depressurising circuit commences its cycle by closing valves 43, 46, 48, 50, 52, 54, 56, 58, 59, 60, and 65 and opening valves 40, 41, 42 and 44 and commencing vacuum pump 18. When the pressure has fallen to a predetermined low level valve 42 is closed and the fumigation injection cycle is commenced in mode 1.

When operating in mode 1 the fumigation injection circuit valves 40, 41 and 44 remain open while the remaining relevant valves listed above are closed and the single dose piston injector 38 injects the appropriate charge of fumigant into the system. Fan 14 will be in operation to circulate the fumigant and heater 16 or cooler 17 will be set to keep the fumigating gas at a predetermined temperature between 5°C and 40°C. The upper level fumigant detector within chamber 10 allows for venting if excess fumigant above a predetermined level is detected. However, in normal operation the dose injected will have the correct predetermined level. The microprocessor is programmed to fumigate for a predetermined time depending on the concentration of the fumigant so as to achieve the ct product which is sought.

Once the preset fumigation time has elapsed the microprocessor commences venting by opening valve 48 and 50 and closing valve 40 to complete fumigation in mode 1.

When operating in mode 2 the water dumping cycle is instituted by opening the valves as described above in sequence. The pressurising/depressurising circuit is engaged after the fumigating medium is present in chamber 10. The fumigant injection circuit is also engaged at this point to inject a "make up" amount of fumigant to replace that lost through the vacuum pump and water absorption.

When the mode 3 fumigant circuit is employed, valves 41 and 48 are closed and the appropriate pair of valves 52 and 54 or 56 and 58 opened to pass the fumigant flushed from chamber 10 over the activated charcoal after the pressurising circuit has been engaged to bring the pressure to the desired level of vacuum. The mode then continues in the same sequencing as mode 1.

The water spray circuit is activated either by a time sequence signal or by a fumigant detector to open valve 43 and allow flow of mains water into chamber 10. With any one of the fumigant modes 1—3 it is possible to omit the water spray circuit. When the microdetector of the fumigation detection circuit detects that a safe level of fumigant has been reached it engages the door open/close circuit once more. However, in the preferred embodiment to speed up the fumigation process the water spray circuit involving feeding water by opening valve 43 from mains is engaged to speed up the removal of fumigant.

Pilot Plant Assessment

A pilot plant assessment of High Concentration——Short Time (HCST) fumigation included large scale insect mortality studies on light brown apple moth and brownheaded leafroller, and the evaluation of the susceptibility of freshly picked Granny Smith apples to fumigation damage and for bromine residues.

The results showed that complete mortality of light brown apple moth (LBAM) and brownheaded leafroller (BHLR) larvae could be achieved with fumigations at 300—350 $g/m^3$ of methyl bromide for 10 minutes at 15°C and 86 kPa abs pressure. At higher vacuums (31 kPa abs) complete mortality could be achieved at lower dosages.

The fruit damage experiments have shown that freshly picked fruit can be treated at the above fumigation conditions without sustaining commercially significant levels of damage. Fruit that had been stored at ambient for up to three days could also be fumigated without damage levels becoming unacceptably high. Bromine residues were below 5.0 mg/kg, the maximum permissible level in the U.S.A.

For fumigation treatment sufficient to achieve complete mortality of LBAM and BHLR i.e. 300—350 g/m³ for 10 minutes there is no significant fruit damage on fruit fumigated the day after picking and coolstored for 2 months before assessment.

On the more severe treatments there was a small amount of damage which was mainly calyx-end breakdown. This damage was of academic interest only.

A comparison between the fruit damage results for conventional (i.e. two hour) fumigation and fumigation according to the present invention shows that there was no difference in damage levels for the majority of treatment and fruit handling options. On the late season fruit that had been held at ambient before fumigation, however, the internal damage levels on conventionally fumigated fruit were consistently higher than for fruit fumigated according to the present invention for all five orchards.

Apart from assessing comparative damage levels between fumigation according to the present invention and traditional fumigation, the pilot plant trials were designed to determine the treatment and handling limits beyond which fruit quality was affected. This was clearly demonstrated in the experiments in which the treatment was delayed and the fruit held at ambient for up to 5 days before being fumigated. The fruit fumigated after 5 days showed some considerable incidence of minor treatment-induced internal damage, particularly the late season fruit. The latter fruit also showed a slight susceptibility to external damage.

For the other treatment options investigated there was no significant alteration in the fruit quality after 2 months coolstorage (except for the high vacuum treatments at high concentrations). On the small quantity of fruit kept for 3 months however there was a small increase in the incidence of external damage. This demonstrates that some forms of damage require long periods of coolstorage to become apparent. Fruit from some trials, particularly the use of DPA to reduce damage should perhaps be left for longer periods before assessment.

The experimental programme has confirmed the feasibility of a rapid fumigation process for apples. Apples in bulk, either freshly picked (up to 3 days old) or temporarily coolstored can be fumigated under conditions sufficient to ensure total leafroller mortality without sustaining undesired fruit damage or unaceptable residual bromine levels.

## Claims

1. A process for the fumigation of produce which comprises treating said produce with gaseous methyl bromide or gaseous ethylene dibromide for from 5 to 30 minutes in a concentration which in the case of methyl bromide is from 40 to 600 g/m³ with the proviso that the product of concentration (expressed in g/m³) × time (expressed in hours) is within the range of 20 to 150 ghr/m³, and in the case of ethylene dibromide is from 10 to 200 g/m³ with the proviso that the ct product is from 5 to 50 ghr/m³.

2. A process according to claim 1 wherein said treatment is conducted for from 8 to 15 minutes.

3. A process according to claim 1 or 2 wherein said treatment is conducted in a sealed fumigation chamber under a partial vacuum.

4. A process according to claim 1, 2 or 3 wherein gaseous methyl bromide is used and the concentration × time product (ct) is from 40 to 80 ghr/m³ for fumigating light brown apple moth or any other leafroller species.

5. A process according to claim 1, 2 or 3 wherein gaseous methyl bromide is used and the said ct product is from 60—120 ghr/m³ for fumigating codling moth.

6. A process according to claim 4 or 5 wherein the produce tested is apples.

7. A process according to claim 6 wherein said process includes a preliminary step of treating the apples in a DPA solution with a concentration of up to 2000 ppm, for a time of up to 2 minutes and fumigating said treated apples within one half hour after said treating.

8. A process according to claim 7 which includes the additional step of rinsing said produce after said fumigation.

9. A process according to any of claims 1 to 8, wherein gaseous methyl bromide is used and the said fumigant is recovered by adsorbing the methyl bromide exhausted from the said fumigation chamber on activated carbon.

10. A process according to claim 9 wherein said fumigation is effected by desorbing adsorbed fumigant.

11. A process according to any of claims 1 to 10, wherein the said treatment with said fumigant is carried out at a temperature of from 5°C to 40°C.

## Revendications

1. Procédé pour la fumigation d'un produit qui comprend l'étape consistant à traiter ledit produit avec du bromure de méthyle gazeux ou du dibromure d'éthylène gazeux pendant une durée allant de 5 à 30 minutes à une concentration qui, dans le cas du bromure de méthyle est de 40 à 600 g/m³ avec la condition que le produit de la concentration (exprimée en g/m³) par le temps (exprimé en heures) est dans la gamme de 20 à 150 ghr/m³, et qui, dans le cas du dibromure d'éthylène est de 10 à 200 g/m³ avec la condition que le produit ct est de 5 à 50 ghr/m³.

2. Procédé selon la revendication 1, dans lequel ledit traitement est effectué pendant un temps allant de 8 à 15 minutes.

3. Procédé selon la revendication 1 ou 2, dans lequel ledit traitement est conduit dans une chambre de fumigation close sous un vide partiel.

4. Procédé selon la revendication 1, 2 ou 3, dans lequel on utilise le bromure de méthyle gazeux et le produit concentration × temps (ct) est de 40 à 80 ghr/m³ pour réaliser la fumigation de la larve de la pomme brun clair ou de tout autre espèce enrouleuse de feuilles.

5. Procédé selon la revendication 1, 2 ou 3, dans lequel on utilise le bromure de méthyle gazeux et dans lequel ledit produit *ct* est de 60—120 ghr/m³ pour soumettre à fumigation la larve de la pomme dite codling.

6. Procédé selon la revendication 4 ou 5, dans lequel ledit produit traité consiste en des pommes.

7. Procédé selon la revendication 6, dans lequel ledit procédé comprend une étape préliminaire de traitement des pommes dans une solution de DPA à une concentration allant jusqu'à 2000 ppm, pendant un temps allant jusqu'à 2 minutes et dans lequel on soumet à la fumigation lesdites pommes traitées dans l'intervalle d'une demi-heure après ledit traitement.

8. Procédé selon la revendication 7, qui comprend l'étape additionnelle consistant à rincer ledit produit après ladite fumigation.

9. Procédé selon l'une quelconque des revendications 1 à 8, dans lequel on utilise le bromure de méthyle gazeux et dans lequel ledit fumigant est récupéré par adsorption du bromure de méthyle évacué de ladite chambre de fumigation sur du charbon activé.

10. Procédé selon la revendication 9, dans lequel ladite fumigation est effectuée par désorption le fumigant adsorbé.

11. Procédé selon l'une quelconque des revendications 1 à 10, dans lequel ledit traitement avec ledit fumigant est effectué à une température de 5°C à 40°C.

**Patentansprüche**

1. Verfahren zum Begasen von Waren, welches die Behandlung der Ware mit gasförmigen Methylbromid oder gasförmigem Ethylendibromid für 5 bis 30 Minuten in einer Konzentration umfaßt, die in dem Fall von Methylbromid von 40 bis 600 g/m³ beträgt, mit der Maßgabe, daß das Produkt von Konzentration (in g/m³ ausgedrückt) × Zeit (in Stunden ausgedrückt) im Bereich von 20 bis 150 ghr/m³ liegt, und im Falle von Ethylendibromid 10 bis 200 g/m³ beträgt, mit der Maßgabe, daß das ct-Produkt 5 bis 50 ghr/m³ beträgt.

2. Verfahren nach Anspruch 1, worin die Behandlung für 8 bis 15 Minuten durchgeführt wird.

3. Verfahren nach Anspruch 1 oder Anspruch 2, worin die Behandlung in einer geschlossenen Begasungskammer unter einem partiellen Vakuum durchgeführt wird.

4. Verfahren nach Anspruch 1, 2 oder 3, worin gasförmiges Methylbromid verwendet wird und das Produkt von Konzentration × Zeit (ct) von 40 bis 80 ghr/m³ beträgt, zur Begasung der hellbraunen Apfelmotte (light brown apple moth) oder jeder beliebigen anderen Blattwalzenspecies (leafroller species).

5. Verfahren nach Anspruch 1, 2 oder 3, worin gasförmiges Methylbromid verwendet wird und das ct-Produkt 60 bis 120 ghr/m³ beträgt zum Begasen der Codling-Motte.

6. Verfahren nach Anspruch 4 oder 5, worin die getestete Ware Äpfel sind.

7. Verfahren nach Anspruch 6, worin das Verfahren eine Vorstufe umfaßt, in der die Äpfel in einer DPA-Lösung mit einer Konzentration von bis zu 2000 ppm für eine Zeit von bis zu 2 Minuten behandelt werden und die so behandelten Äpfel innerhalb einer halben Stunde nach der Behandlung begast werden.

8. Verfahren nach Anspruch 7, welches den zusätzlichen Schritt des Spülens der Ware nach der Begasung umfaßt.

9. Verfahren nach einem der Ansprüche 1 bis 8, worin gasförmiges Methylbromid verwendet wird und das Begasungsmittel rückgewonnen wird, indem das Methylbromid, welches aus der Begasungskammer ausgepumpt wird, auf aktivierter Kohle adsorbiert wird.

10. Verfahren nach Anspruch 9, worin die Begasung durchgeführt wird, indem das adsorbierte Begasungsmittel desorbiert wird.

11. Verfahren nach einem der Ansprüche 1 bis 10, worin die Behandlung mit dem Begasungsmittel bei einer Temperatur von 5°C bis 40°C durchgeführt wird.

FIG.1.

vent

vent

atmos

mains

heat

heat

heat

COOL

1

Cycle Start/ Restart Circuit

Door open/close bin load/unload circuit

Pressurising/ Depressurising Circuit

Fumigant Injection Circuit

Mode 1 Fumigation Circuit

Mode 2 Fumigation Circuit

Mode 3 Fumigation circuit

Mode 4 Fumigation circuit

WATER SPRAY CIRCUIT

FIG 2